# EUROPEAN PATENT SPECIFICATION

(11) **EP 1 403 512 B1**
(45) Date of publication and mention of the grant of the patent: **07.06.2006**
(21) Application number: 03021829.1
(22) Date of filing: 26.09.2003
(51) Int. Cl.: F02N 17/00, F02D 41/04

(54) **Engine start system**
Verbrennungsmotor-Anlassersystem
Système de démarrage pour moteur à combustion interne

(30) Priority: 30.09.2002 JP 2002287471; 30.09.2002 JP 2002287472
(43) Date of publication of application: 31.03.2004
(73) Proprietor: Mazda Motor Corporation, Aki-gun, Hiroshima-ken (JP)
(72) Inventor: Kuroki, Masayuki, Aki-gun Hiroshima (JP); Tetsuno, Masayuki, Aki-gun Hiroshima (JP); Mamiya, Kiyotaka, Aki-gun Hiroshima (JP); Taga, Junichi, Aki-gun Hiroshima (JP); Araki, Keiji, Aki-gun Hiroshima (JP)
(74) Representative: Zinnecker, Armin

(56) References cited:
- EP-A- 1 074 713
- EP-A- 1 288 491
- EP-A- 1 329 622
- EP-A- 1 367 256
- CA-A- 2 339 461
- DE-A- 10 019 742
- DE-A- 19 848 368
- US-A- 5 957 107

## Description

### BACKGROUND OF THE INVENTION

### 1. Field of the Invention

The present invention relates to an engine starting system for automatically stopping an engine under engine idle conditions, for instance, and for automatically restarting the engine subsequently.

### 2. Description of the Related Art

New engine starting systems have been developed in recent years to reduce fuel consumption and carbon dioxide (CO₂) emissions, for Instance. These starting systems are designed to cause an engine to automatically stop once during engine idle operation and automatically restart when conditions for restarting, such as a driver's operation for starting, have been met.

To automatically restart the engine which has once stopped, it is necessary that the engine be instantly started in response to the driver's starting operation-For this reason, It is not desirable to use a conventionally known ordinary starting procedure, in which the engine is started by cranking its output shaft by means of a starting motor requiring a good deal of time up to the end of starting.

It is therefore desirable to supply fuel into a particular cylinder (the cylinder on an expansion stroke) at engine stop and cause ignition and combustion in that cylinder such that the engine is instantly started with resultant energy. If a piston in the cylinder is not located at an appropriate position, if located at a position extremely close to the top dead center or bottom dead center, for example, under engine stop conditions, however, there arises such a possibility that sufficient energy of combustion is not obtained due to a significantly small amount of air in the cylinder or the combustion energy can act on the piston over too short a distance only, resulting in a failure to normally start up the engine.

The prior art proposes measures (starting systems) for overcoming the aforementioned problem. One example of such measures is shown in Japanese Laid-open Utility Model Publication No. 1985-128975, in which a crankshaft of an engine is provided with a braking device which is controlled such that a piston in a cylinder which is on the expansion stroke at engine stop stops at a proper position on the stroke. Another example is shown in Japanese Unexamined Patent Publication No. 1996-210231, in which there is provided an adjusting device including a motor and gears for adjusting the positions of pistons wherein, if the pistons are not properly positioned at engine stop, the adjusting device shifts the pistons to proper positions under engine stop conditions.

According to the starting system shown in Japanese Laid-open Utility Model Publication No. 1985-128975, there is the need for a dedicated device for braking the crankshaft besides a vehicle braking system. In addition, it is extremely difficult to precisely control the braking device such that the piston stops at the proper position.

According to the starting system shown in Japanese Unexamined Patent Publication No. 1996-210231, on the other hand, it is necessary to provide the aforementioned adjusting device including the motor and gears to the engine, resulting in an increase in engine size and cost increase.

EP 1 074 713 A discloses an engine starting system which controls the arrest position of the engine crankshaft during engine stop operation by controlling the open and close time of the inlet and outlet valves to achieve a braking-like effect.

EP 1 288 491 A which was filed before and published after the priority date of the invention discloses an automatic stop and start control system for an engine comprising an intake air quantity regulator and a controller for controlling said regulator while performing engine stop operation in such a way to increase the amount of intake air for a specific period of time.

### SUMMARY OF THE INVENTION

In view of the foregoing, it is an object of the invention to provide an engine starting system which makes it possible to achieve an increased probability for pistons to stop at proper positions at engine stop as well as improved engine starting performance with a simple construction.

According to the invention, an engine starting system automatically stops an engine when specific conditions for engine stop have been satisfied and automatically restarts the engine by injecting fuel into a cylinder which is initially on an expansion stroke at engine stop and causing ignition and combustion in the cylinder which is initially on the expansion stroke when conditions for engine restart have been satisfied. The engine starting system includes an intake air quantity regulator for regulating the amount of intake air drawn into cylinders of the engine, and a controller for controlling the intake air quantity regulator while performing engine stop operation after the conditions for engine restart have been satisfied, wherein the controller actuates the intake air quantity regulator and performs control operation for increasing the amount of intake air for a specific period of time during execution of the engine stop operation to increase forces opposing movements toward top dead centers of pistons in a cylinder which is initially on a compression stroke and in the cylinder which is initially on the expansion stroke at engine stop.

In this construction, air in the cylinder which is on the compression stroke is compressed as the piston in the cylinder approaches the top dead center when the engine is stopping after execution of the engine stop operation. The engine turns in the reverse running direction as the piston in the cylinder which was on the compression strode is forced back toward Its bottom dead center, causing the piston in the cylinder which was initially on the expansion stroke to move toward the top dead center. As a result, air in the cylinder initially on the expansion stroke is compressed and a resultant pressure forces the piston in the cylinder back toward the bottom dead center. As such piston movements are repeated for a while, the pistons stop after making some oscillatory motion. The closer the pistons in the cylinders on the compression and expansion strokes to their top dead centers, the larger the forces pushing the pistons backward. In particular, the forces pushing the pistons backward increase if the amount of intake air drawn into the cylinders is increased immediately before engine stop as stated above, so that the pistons stop within a specific range around the midpoint of their strokes with an extremely high probability.

As piston stop positions are adjusted in this fashion, it is possible to prevent such problems that the amount of air for combustion in the cylinder which was initially on the expansion stroke becomes too small or combustion energy does not properly act on the piston in the cylinder at engine restart, thereby ensuring smooth engine restart by combustion in the cylinder which was initially on the expansion stroke.

Preferably, the controller controls the Intake air quantity regulator in such a manner that the amount of intake air drawn into the cylinder which is initially on the expansion stroke is larger than the amount of intake air drawn into the cylinder which is on the compression stroke at engine stop.

With this arrangement, the piston in the cylinder which was initially on the expansion stroke is stopped at a position slightly closer to the bottom dead center within the specific range around the midpoint of the stroke. It is however possible to relatively increase the amount of air in the cylinder which was initially on the expansion stroke and obtain increased energy from combustion in the cylinder at engine restart while preventing the occurrence of such a situation that the combustion energy does not properly act on the piston in the cylinder at engine restart due to too short a distance from the piston stop position to the bottom dead center. This is advantageous for improving engine starting performance.

The aforementioned intake air quantity regulator is formed of a valve provided in an intake passage for adjusting its cross-sectional area. More particularly, the intake air quantity regulator may be a throttle valve or idle speed control (ISC) valve provided in the intake passage.

The controller performs the aforementioned control operation for increasing the amount of intake air after cutting fuel supply and setting the valve at a specific opening when the conditions for engine stop have been satisfied.

The controller closes the valve with specific timing after increasing the amount of intake air by setting the valve at the specific opening so that the amount of intake air drawn into the cylinder which is on the compression stroke becomes smaller than the amount of intake air drawn into the cylinder which is initially on the expansion stroke at engine stop.

With this arrangement, it is possible to cause the piston in the cylinder which was initially on the expansion stroke at a position slightly closer to the bottom dead center within the specific range around the midpoint of the stroke.

The engine starting system may further include an EGR valve provided in an EGR channel. In this construction, the controller controls the valve and the EGR valve provided in the EGR channel in accordance with engine temperature when increasing the amount of intake air by setting the valve at the specific opening, wherein the controller increases the ratio of the amount of exhaust gas to the amount of intake air introduced into the cylinders by decreasing the opening of the valve and increasing the opening of the EGR valve when the engine temperature is relatively low, and decreases the ratio of the amount of exhaust gas to the amount of intake air introduced into the cylinders by increasing the opening of the valve and decreasing the opening of the EGR valve when the engine temperature is relatively high.

In this form of the invention, the ratio of the amount of exhaust gas to the amount of intake air introduced into the cylinders is increased and the temperature of air in the cylinders is increased at engine stop when the engine temperature is low. This is advantageous in accelerating evaporation of fuel during engine restart operation. When the engine temperature is high, on the other hand, the ratio of the amount of exhaust gas to the amount of intake air introduced into the cylinders is decreased so that excessive increase of intake air introduced into the cylinders is avoided. This makes it possible to prevent a reduction in air charging quantity due to a reduction in intake air density.

The engine starting system may further Include a variable valve timing mechanism which makes it possible to vary at least exhaust valve opening timing, wherein the controller retards the exhaust valve opening timing up to approximately the bottom dead center when performing the engine stop operation.

In this construction, the exhaust valve of the cylinder which will be on the expansion stroke at engine stop does not open during the engine stop operation, thereby preventing a reduction in the amount of air in the cylinder, even if the piston in the cylinder moves to a position close to the bottom dead center when producing oscillatory motion immediately before engine stop. Also, energy of combustion produced in the cylinder which was initially on the expansion stroke efficiently acts on the piston in the cylinder up to approximately the bottom dead center without escaping into an exhaust passage, resulting in an improvement in the engine starting performance.

As explained in the foregoing, the engine starting system of the invention actuates the intake air quantity regulator when the engine is going to stop for increasing the amount of intake air for a specific period of time during execution of the engine stop operation to increase forces opposing movements toward the top dead centers of the pistons in the cylinder which is on the compression stroke and in the cylinder which is initially on the expansion stroke at engine stop. As a result, the pistons stop within the specific range around the midpoint of their strokes with an extremely high probability. It is therefore possible to prevent such problems that the amount of air for combustion in the cylinder which was initially on the expansion stroke becomes too small or combustion energy does not properly act on the piston In the cylinder at engine restart, thereby ensuring smooth engine restart by combustion in the cylinder which was initially on the expansion stroke.

Overall, the engine starting system of the invention makes it possible to cause the pistons to stop at proper positions at engine stop and to properly restart the engine with a simple construction, without the need for a braking device for bralcing a crankshaft or an adjusting device including a motor and gears unlike prior art technology.

### BRIEF DESCRIPTION OF THE DRAWINGS

FIG. 1 is a schematic sectional view of an engine provided with a starting system according to an embodiment of the invention ;
FIG. 2 is a schematic plan view of the engine of PIG. 1;
FIG. 3 is a flowchart showing a procedure for engine stop and restart control operation;
FIG. 4 is a flowchart showing a routine for detecting the positions of pistons at engine stop;
FIG. 5 is a flowchart showing a routine performed in first restart control mode of engine restart;
FIG. 6 is a flowchart showing a routine performed in third restart control mode of engine restart;
PIGS. 7A and 7B show crank angle signals output from two crank angle sensors when the engine is running in the forward direction and reverse direction, respectively;
FIG. 8 is a diagram showing ranges set for selection of a restart control mode depending on the positions of the pistons at engine stop;
FIG. 9 is an explanatory diagram showing variations in engine speed, throttle opening and negative intake air pressure at engine stop as well as successive cycles of individual cylinders;
FIG. 10 is an explanatory diagram showing successive cycles of the individual cylinders and their combustion timing at engine restart;
FIG. 11 is a time chart showing variations with time in engine speed, crank angle, pressures in the individual cylinders and indicated torque occurring at engine restart;
FIG. 12 is a diagram showing the relationships between the piston stop position at engine stop and a required air-fuel ratio for the cylinder on a compression stroke, the amount of air in the cylinder on the compression stroke, the amount of air in the cylinder on an expansion stroke, and the frequency of occurrences;
FIG. 13 is a block diagram of a control system according to a variation of the embodiment, of the invention;
FIG. 14 is a schematic plan view of an engine according to another variation of the embodiment of the invention: and
FIG. 15 is a time chart showing how a throttle valve and an exhaust gas recirculation (EGR) valve of FIG. 14 are controlled when the engine is going to stop.

### DETAILED DESCRIPTION OF THE PREFERRED

### EMBODIMENTS OF THE INVENTION

Now, specific embodiments of the invention are described below with reference to the appended drawings.

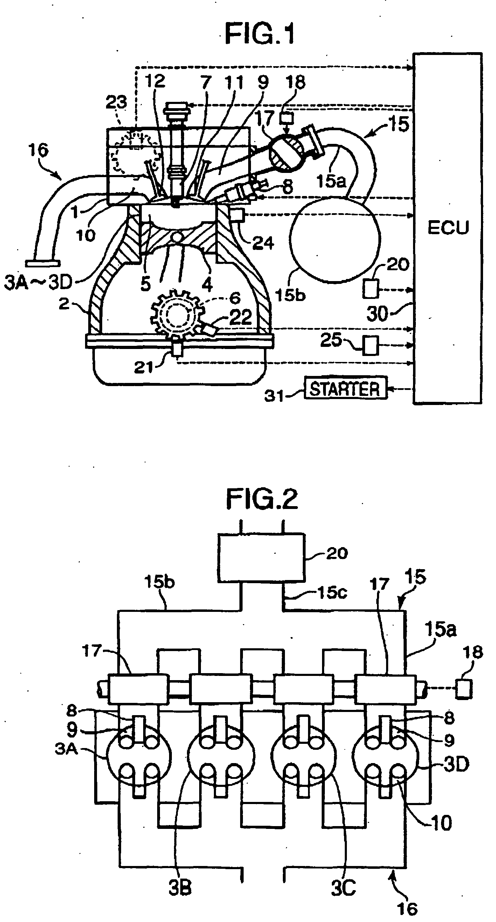

FIGS. 1 and 2 are diagrams schematically showing the construction of an engine employing a starting system according to an embodiment of the invention. As shown in these Figures, an engine body includes a cylinder head 1 and a cylinder block 2 provided with multiple cylinders. In this embodiment, there are provided four cylinders 3A-3D. Pistons 4 are fitted in the individual cylinders 3A-3D whereby a combustion chamber 5 is formed above the piston 4 In each of the cylinders 3A-3D. The pistons 4 are connected to a crankshaft 6 by respective connecting rods.

There is installed a Spark plug 7 at the top of the combustion chamber 5 in each of the cylinders 3A-3D with a far end of the spark plug 7 located in the combustion chamber 5.

There is further provided a fuel injector 8 at one side of the combustion chamber 5 for injecting fuel directly into the combustion chamber 5. Incorporating a needle valve and a solenoid which are not illustrated, the fuel injector 8 is actuated by a pulse signal. The fuel injector 8 opens when the pulse signal is input for a period of time corresponding to its pulselength to inject an amount of fuel corresponding to valve opening time. The fuel injector 8 is oriented such that it sprays fuel toward the vicinity of the spark plug 7. The fuel is supplied to the fuel injector 8 from a fuel pump (not shown) via a fuel supply channel. A fuel supply system is constructed in such a manner that it produces a fuel pressure higher than the pressure in the combustion chamber 5 during each successive compression stroke.

There are formed intake ports 9 and exhaust ports 10 opening into the combustion chambers 5 of the Individual cylinders 3A-3D with intake valves 11 and exhaust valves 12 provided in the Intake ports 9 and the exhaust ports 10, respectively. The intake valves 11 and the exhaust valves 12 are actuated by valve actuating mechanisms (not shown) including camshafts. As will be later described in detail, opening and closing timing of the intake and exhaust valves 11, 12 of the individual cylinders 3A-3D is preset such that the cylinders 3A-3D perform their combustion cycles with a specific phase delay.

The intake ports 9 are connected to an intake passage 15 while the exhaust ports 10 an exhaust passage 16. Throttle valves 17 (for regulating the cross-sectional area of intake channels) serving as an intake air quantity regulator are provided in the intake passage 15. In this embodiment, the throttle valves 17 are provided in branched intake channels 15a to achieve high-speed response in controlling the quantity of intake air. More specifically, the Intake passage 15 includes the branched intake channels 15a connecting to the individual cylinders 3A-3D downstream of a surge tank 15b, downstream ends of the branched intake channels 15a joining to the intake ports 9 of the respective cylinders 3A-3D. The throttle valves 17 of a multiple rotary valve type that simultaneously regulate the flow of intake air are provided near the downstream ends of the individual branched intake channels 15a. These throttle valves 17 are driven by an actuator 18.

An airflow sensor 20 for detecting the quantity of intake air is provided in a common intake passage 15c upstream of the surge tank 15b in the intake passage 15. As will be later described in detail, there are provided two (first and second) crank angle sensors 21, 22 on the crankshaft 6 for detecting its angle of rotation and outputting first and second crank angle signals having a specific amount of phase difference from each other. There are also provided cam angle sensors 23 on the aforementioned camshafts for detecting their specific rotational positions to give a cylinder identification signal. Other sensing devices necessary for engine control provided in addition to the foregoing include a water temperature sensor 24 for detecting the temperature of engine cooling water and an accelerator depression sensor 25 for detecting the amount of depression of an accelerator pedal.

Designated by the numeral 30 in FIG. 1 is an electronic control unit (ECU) serving as a means for engine control (controller). Upon receiving signals from the individual sensors 20-25 mentioned above, the ECU 30 outputs signals for controlling the amount of fuel to be injected and fuel injection timing to the fuel injectors 8, outputs an ignition timing control signal to an ignition device, and outputs a signal for controlling throttle opening to the actuator 18.

When specific conditions for engine stop have been met during engine idle operation, the engine is automatically stopped by interrupting fuel supply, for instance, and when conditions for engine restart have been met subsequently, the engine is automatically restarted.

When the engine is going to stop, it is controlled as follows. The throttle valves 17 are opened to specific opening angles for a particular period of time during which the engine is stopping to Increase the amounts of air drawn into the cylinders which will be on compression and expansion strokes at engine stop, particularly the amount of air drawn into the cylinder which will be on the expansion stroke, in order to increase forces opposing movements of the pistons 4 in these cylinders toward their top dead centers.

When the engine is being restarted, it is controlled as follows. While the engine is normally turned in its forward running direction by producing combustion in the cylinder which is initially on the expansion stroke, initial combustion is produced in the cylinder which is on the compression stroke if the piston 4 in the cylinder is located at a position within a specific range at engine stop. As a result, the engine turns slightly in the reverse running direction, so that the piston 4 in the cylinder which was initially on the expansion stroke rises, causing a pressure increase therein. Succeeding combustion in the cylinder which was initially on the expansion stroke is produced under this condition.

The engine of the present embodiment is so constructed as to selectively carry out, depending on where the pistons 4 are located at engine stop, first restart control mode in which the initial combustion is performed in the cylinder which is on the compression stroke, the succeeding combustion is performed in the cylinder which was initially on the expansion stroke, and recombustion is performed in the cylinder which was on the compression stroke when the piston 4 now ascending in the cylinder reaches its top dead center using air left unused for subsequent combustion after the initial combustion in the cylinder as described above, second restart control mode in which the initial combustion and the succeeding combustion are performed in the cylinder which was on the compresslon stroke and the cylinder on the expansion stroke, respectively, but recombustion in the cylinder which was on the compression stroke is not performed, or third restart control mode in which the engine is restarted by combustion performed in the cylinder which was on the expansion stroke and succeeding combustion performed in the cylinder which was on the compression stroke without producing the aforementioned initial combustion in the cylinder which was on the compression stroke while assisting the engine with a starter (starting motor) 31.

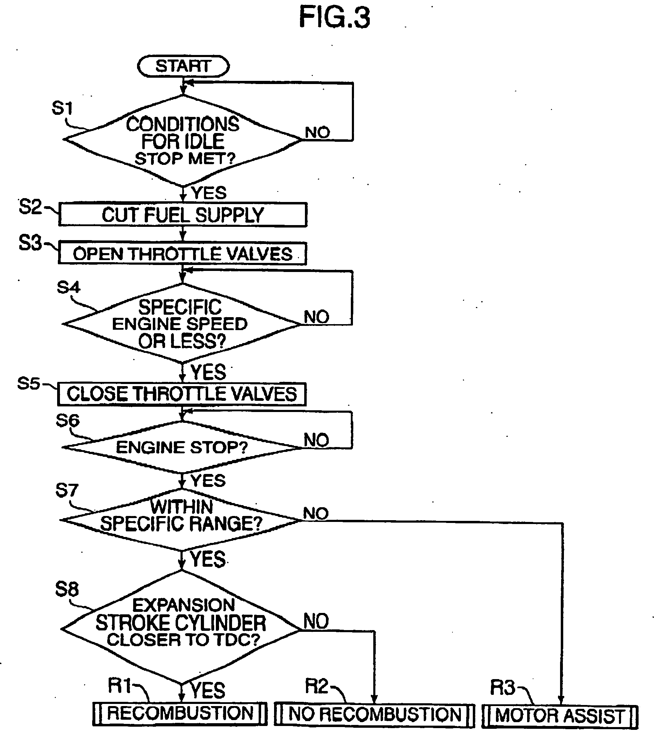

Engine stop and restart control operation performed by the ECU 30 is now described referring to flowcharts shown in FIGS. 3 to 6.

A procedure shown in the flowchart of FIG. 3 begins from a condition in which the engine is running. First, the ECU 30 judges whether the aforementioned specific conditions for engine stop at idle have been met in step S1. This judgment is made based on such sensor inputs as vehicle speed and engine temperature (temperature of the engine cooling water), in which the conditions for engine stop at idle are judged to have been met if the vehicle speed remains at zero for at least a specific period of time, the engine temperature falls within a specific range, and there is not any particular inconvenience in stopping the engine, for example.

When the conditions for engine stop at idle have been met, the ECU 30 cuts fuel supply to the individual cylinders 3A-3D (step S2). Then, the ECU 30 once opens the throttle valves 17 to a specific opening angle (step S3) and holds the throttle valves 17 in this condition until the engine speed decreases to a specific value or less (step S4). When the engine speed has decreased to the specific value or less, the ECU 30 closes the throttle valves 17 (step S5)

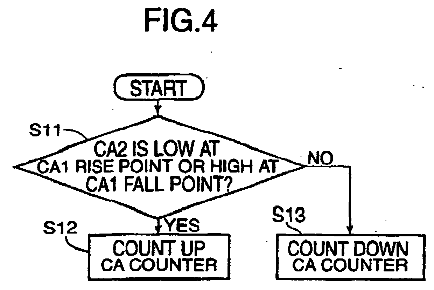

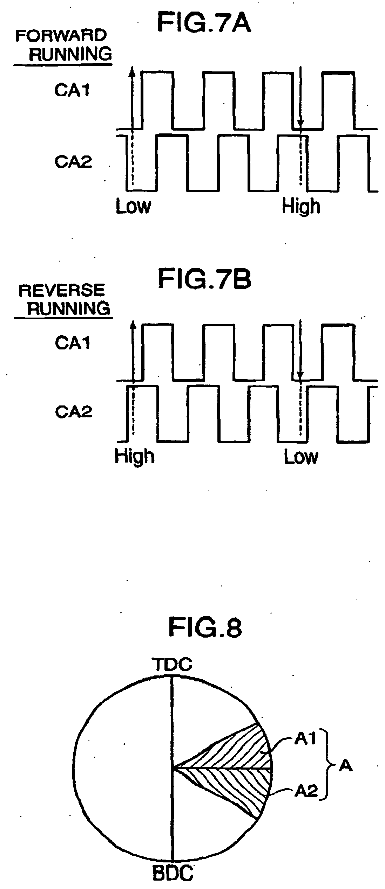

Next, the ECU 30 Judges whether the engine has stopped in step S6. When the engine has stopped, the ECU 30 judges whether any of the pistons 4 has stopped within a specific range in step S7 based on the positions of the pistons 4 at rest detected by a later-described stop position detecting routine shown in FIG. 4. Here, the aforementioned "specific range" means a state in which the piston 4 in the cylinder which is initially on the expansion stroke is in a region A (including subregions A1 and A2) shown by hatching in FIG. 8, or the cylinder on the expansion stroke is in a middle portion of the expansion stroke. If the piston 4 in the cylinder on the expansion stroke is in this specific range, the ECU 30 proceeds to step S8 and judges whether the piston 4 in the cylinder is closer to the top dead center (TDC) than a specific position, or the piston 4 in the cylinder is positioned in the subregion A1 closer to TDC than the middle position of the region A shown in FIG. 8.

If the piston 4 in the cylinder on the expansion stroke is in the aforementioned specific range and positioned closer to TDC than the middle position of the region A (subregion A1) at engine stop according to the judgment results in steps S7 and S8, the ECU 30 carries out a routine R1 in the first restart control mode in which recombustion is performed. If the piston 4 in the cylinder on the expansion stroke is in the aforementioned specific range and positioned closer to the bottom dead center (BDC) than the middle position of the region A (subregion A2), the ECU 30 carries out a routine R2 in the second restart control mode in which recombustion is not performed. Also, if the piston 4 in the cylinder on the expansion stroke is not in the aforementioned specific range (region A), the ECU 30 carries out a motor assist routine R3 in the third restart control mode.

FIG. 4 shows the aforementioned stop position detecting routine. When this routine has started, the ECU 30 examines the first crank angle signal CA1 and the second crank angle signal CA2 output from the first and second crank angle sensors 21, 22, respectively, judges whether the second crank angle signal CA2 is at a low level at a leading edge of the first crank angle signal CA1, or the second crank angle signal CA2 is at a high level at a trailing edge of the first crank angle signal CA1. In other words, the ECU 30 judges whether the engine is running in the forward direction or reverse direction by determining whether there is a relationship shown in FIG. 7A or 7B in the phases of the first and second cremk angle signals CA1, CA2 (step S11)

More specifically, if the engine is running in the forward direction, the second crank angle signal CA2 is delayed by about half a pulselength from the first crank angle signal CA1 as shown in FIG. 7A so that the second crank angle signal CA2 becomes "low" at the leading edge of the first crank angle signal CA1 and the second crank angle signal CA2 becomes "high" at the trailing edge of the first crank angle signal CA1. If the engine is running in the reverse direction, the second crank angle signal CA2 is advanced by about half the pulselength from the first crank angle signal CA1 as shown in FIG. 7B so that the second crank angle signal CA2 becomes "high" at the leading edge of the first crank angle signal CA1 and the second crank angle signal CA2 becomes "low" at the trailing edge of the first crank angle signal CA1 on the contrary. If the judgment result in step S11 is in the affirmative, the ECU 30 causes a crank angle counter for measuring changes in crank angle in the engine's forward running direction to count up (step S12). If the judgment result in step S11 is in the negative, on the other hand, the ECU 30 causes the crank angle counter to count down (step S13). The ECU 30 can determine the positions where the pistons 4 are located at engine stop by examining a count value of the crank angle counter.

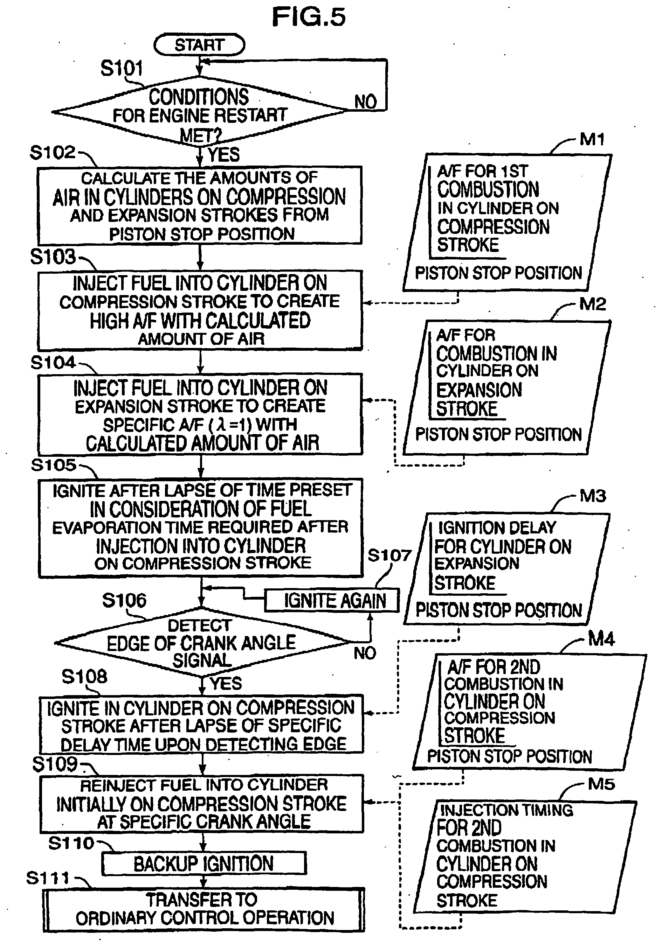

FIG. 5 shows the routine R1 carried out in the first restart control mode associated with recombustion when the judgment result in step S8 in the flowchart of FIG. 3 is in the affirmative. In this routine, the ECU 30 first judges whether the aforementioned specific conditions for engine restart have been met in step S101. If the conditions for engine restart have not been met, the ECU 30 waits until the conditions are satisfied.

When the conditions for engine restart have been met (YES in the judgment in step S101) as the accelerator pedal is depressed for starting the vehicle from rest or battery voltage has dropped, for example, the ECU 30 calculates the amounts of air in the cylinder on the compression stroke and the cylinder on the expansion stroke in step S102 based on the positions where the pistons 4 are located at engine stop. Specifically, the ECU 30 calculates current volumetric capacities of the combustion chambers 5 in the cylinder on the compression stroke and the cylinder on the expansion stroke. The cylinder on the expansion stroke is filled with fresh air immediately after engine stop because the engine stops after turning several times when the fuel is out. In addition, internal pressures in the cylinder on the compression stroke and the cylinder on the expansion stroke become generally equal to the atmospheric pressure under engine stop conditions. Thus, the ECU 30 can calculate the amounts of air in the cylinder on the compression stroke and the cylinder on the expansion stroke.

Subsequently, the ECU 30 causes the engine to inject fuel into the cylinder on the compression stroke to create a specific air-fuel ratio suited for the initial combustion in the cylinder on the compression stroke with the calculated amount of air existing in the cylinder in step S103. The ECU 30 then controls the engine to inject fuel into the cylinder on the expansion stroke to create a specific air-fuel ratio suited for the succeeding combustion in the cylinder on the expansion stroke with the calculated amount of air existing in the cylinder in step S104. Here, the air-fuel ratio for the initial combustion in the cylinder on the compression stroke and the air-fuel ratio for the succeeding combustion in the cylinder on the expansion stroke are obtained from maps M1, M2 in accordance with the piston stop position. The maps M1, M2 are preset such that the air-fuel ratio at the initial combustion in the cylinder on the compression stroke becomes higher than the stoichiometric air-fuel ratio, whereas the air-fuel ratio at the succeeding combustion in the cylinder on the expansion stroke becomes approximately equal to or slightly lower than the stoichiometric air-fuel ratio.

Proceeding to step S105, the ECU 30 causes ignition in the cylinder on the compression stroke after a lapse of a particular period of time preset in consideration of fuel evaporation time required after fuel injection into the cylinder. In step S106, the ECU 30 judges whether the piston 4 in the cylinder has moved depending on whether an edge of the crank angle signals (i.e., the leading edge or trailing edge of the crank angle signals) is detected within a specific period of time after ignition. If the piston 4 has not moved due to misfire, the ECU 30 repeatedly causes ignition in the cylinder on the compression stroke (step S107).

When an edge of the crank angle signals has been detected (YES in the judgment In step S106), the ECU 30 proceeds to step S108 to cause ignition in the cylinder on the expansion stroke after a lapse of a particular delay time after detecting the edge. This delay time is obtained from a map M3 in accordance with the piston stop position.

Proceeding to step S109, the ECU 30 causes the engine to inject fuel again into the cylinder which was on the compression stroke when a specific crank angle (i.e., a second injection point for the cylinder on the compression stroke) has been reached. In this step, the ECU 30 calculates the amount of fresh air remaining in the cylinder on the compression strode, obtains an air-fuel ratio suited for second combustion in the cylinder on the compression stroke from a map M4 in accordance with the aforementioned piston stop position, calculates the amount of fuel to be injected based on the amount of fresh air and the air-fuel ratio thus obtained, and sets the second Injection point for the cylinder on the compression stroke referring to a map M5 such that compressed self-ignition would occur with appropriate timing in the cylinder. Here, the air-fuel ratio at the second combustion in the cylinder on the compression stroke is set at a level lower than the stoichiometric air-fuel ratio to obtain a larger driving torque.

While compressed self-ignition is performed at this cycle of fuel injection, the ECU 30 makes backup ignition at about TDC to make up for potential misfire (step S110).

Upon completion of the aforementioned restart control operation, the ECU 30 transfers to ordinary control operation (step S111).

While no flowchart is provided for illustrating details of the routine R2 performed in the second restart control mode without recombustion when the judgment result in step S8 in the flowchart of FIG. 3 is in the negative, the routine R2 carried out by the ECU 30 is generally the same as steps S101 to S108 of the routine R1 of the first restart control mode (FIG. 5) except that, in a step corresponding to step S103, the air-fuel ratio for the cylinder which was on the compression stroke obtained from a map in accordance with the aforementioned piston stop position is approximately equal to or lower than the stoichiometric air-fuel ratio.

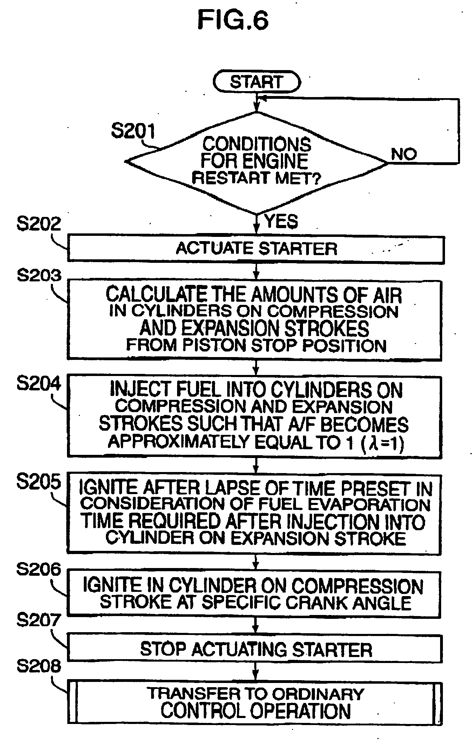

FIG. 6 shows the motor assist routine R3 carried out in the third restart control mode when the judgment result in step S8 in the flowchart of FIG. 3 is in the negative. In this routine, the ECU 30 first judges whether the specific conditions for engine restart have been met in step S201. If the conditions for engine restart have not been met, the ECU 30 waits until the conditions are satisfied.

When the conditions for engine restart have been met (YES in the judgment in step S201), the ECU 30 actuates the starter 31 in step S202, calculates the amounts of air in the cylinder on the compression stroke and the cylinder on the expansion stroke in step S203 based on the positions where the pistons 4 are located at engine stop, and causes the engine to Inject fuel into the cylinder on the compression stroke and the cylinder on the expansion stroke such that the air-fuel ratio in these cylinders becomes approximately equal to the stoichiometric air-fuel ratio in step S204. Then, in step S205, the ECU 30 causes ignition in the cylinder on the expansion stroke after a lapse of a particular period of time preset in consideration of fuel evaporation time required after fuel injection into the cylinder.

Next, the ECU 30 causes ignition in the cylinder on the compression stroke when a specific crank angle has been reached in step S206. Thereafter, the ECU 30 is being shifted to perform an ordinary start control operation and when an engine rotational speed reaches to a point where a drive of a starter 31 is determined to be unnecessary, then the ECU 30 stops actuating the starter 31 (step S207) and then transfers to ordinary control operation (step S208).

The working of the starting system of the present embodiment is now discussed.

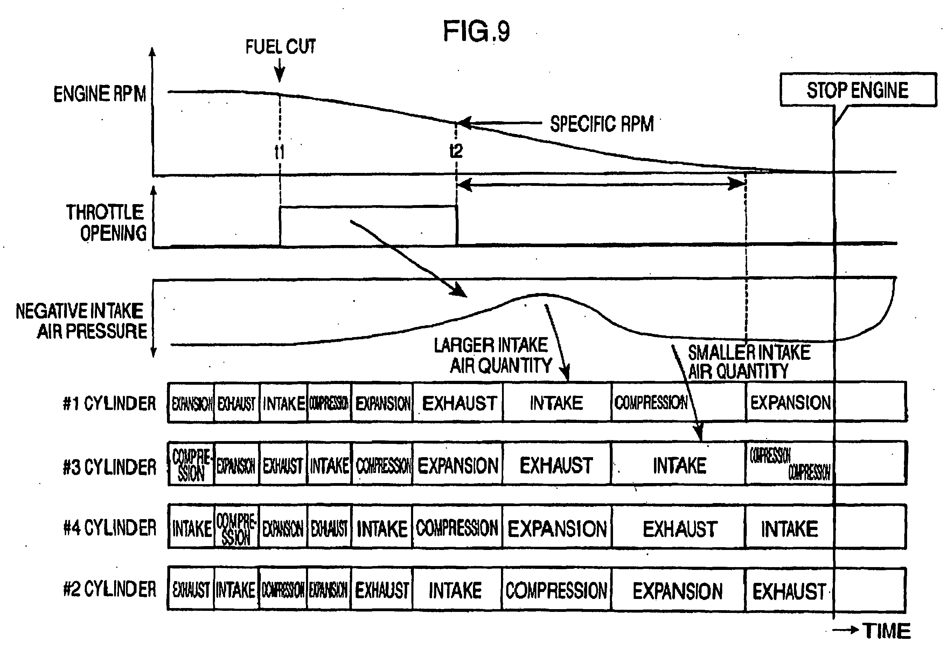

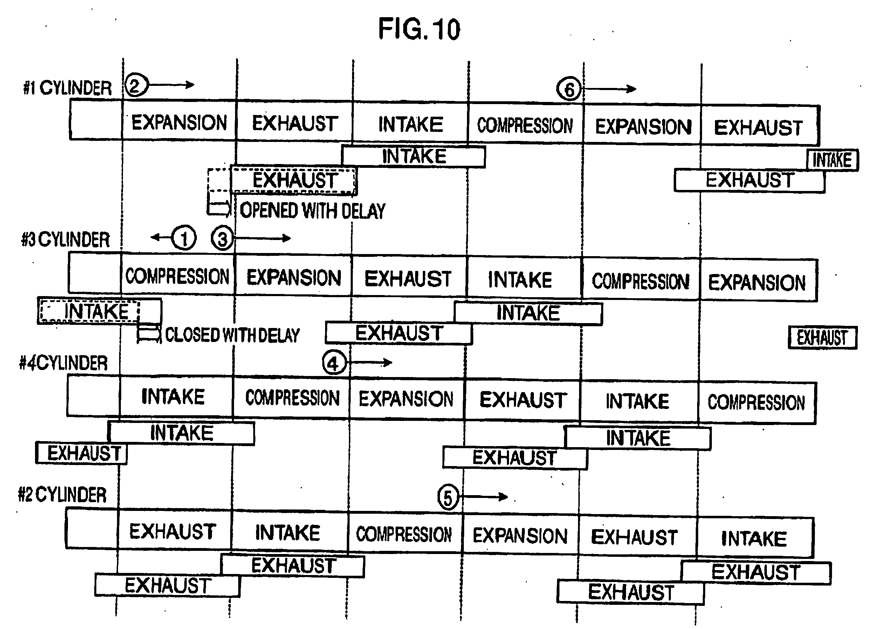

A multicylinder four-cycle engine is constructed in such a fashion that individual cylinders undergo repeated cycles of intake, compression, expansion and exhaust strokes with the earlier-mentioned specific phase delay. The cylinders 3A-3D of the four-cylinder engine of this embodiment, which are now referred to as the first cylinder 3A, the second cylinder 3B, the third cylinder 3C and the fourth cylinder 3D in this order as viewed from one end of cylinder bank, undergo the aforementioned cycles with a successive phase delay of 180° in the order or the first to fourth cylinders 3A-3D as shown in FIGS. 9 and 10.

When the engine being operated goes into a specific idle state in which no engine output is needed, fuel supply is interrupted at a point in time t1 shown in FIG. 9 when the conditions for engine stop are satisfied based on the result of the aforementioned judgment concerning whether the conditions have been met, whereby the engine speed gradually decreases, causing the engine to eventually stop. In this embodiment, the engine is so controlled as to open the throttle valves 17 up to the earlier-mentioned specific opening angle at the point in time t1 and then close the throttle valves 17 at a point in time t2 when the engine speed has dropped down to a preset value to increase the probability that the piston stop position falls within a desirable range by use of air pressures in the cylinders 3A-3D.

More specifically, as the throttle valves 17 are opened to the specific opening angle during a period from the point in time t1 to the point in time t2, negative intake air pressure momentarily decreases (the quantity of intake air increases) with a slight time delay and the negative intake air pressure increases (the quantity of intake air decreases) subsequently. Parameters such as the engine speed are preset such that the period of time during which the negative intake air pressure momentarily decreases becomes generally equal to the duration of the Intake stroke of the cylinder which is on the expansion stroke at engine stop. With this arrangement, the quantity of intake air drawn into the individual cylinders 3A-3D before engine stop increases, particularly in the cylinder (the first cylinder 3A in the example of FIG. 9) which is on the expansion stroke at engine stop, compared to a case in which the throttle valves 17 are instantly closed at the point in time t1 when the conditions for engine stop have been satisfied.

When the engine is going to stop, air in the cylinder on the compression stroke is compressed, producing a pressure exerted against the ascending piston 4 in the relevant cylinder, as the piston 4 approaches TDC. The engine is caused to turn in the reverse direction since the piston 4 in the cylinder on the compression stroke is forced back toward BDC by this pressure. As a result, the piston 4 in the cylinder which was initially on the expansion stroke moves toward TDC, causing a pressure increase in the relevant cylinder, so that the piston 4 in the cylinder on the expansion stroke is forced back toward BDC by this pressure. The pistons 4 stop after making some oscillatory motion in this fashion. The closer the pistons 4 in the cylinder on the compression stroke and the cylinder on the expansion stroke to their TDC, the larger the pushing forces produced in these cylinders. Therefore, the pistons 4 often stop at about the midpoint of their strokes.

Particularly because the backward pushing forces exerted on the pistons 4 are increased by increasing the quantity of intake air before engine stop when the pistons 4 approach TDC as stated above, the probability that the pistons 4 will stop within a specific range around the midpoint of their strokes is increased. Furthermore, if the throttle valves 17 are controlled in the aforementioned fashion such that the quantity of intake air drawn into the cylinder on the expansion stroke becomes larger than the quantity of intake air drawn into the cylinder on the compression stroke, the piston 4 in the cylinder on the expansion stroke will stop slightly closer to BDC within the range around the midpoint of the stroke with a higher probability.

Since the engine turns several times due to inertia from the point in time t1 of cutting the fuel supply up to a point of complete engine stop as already mentioned, burned gas is expelled from the cylinders and even the cylinder on the expansion stroke is almost completely filled with fresh air. When the engine stops, gases and air in the cylinders immediately leak out, resulting in a pressure decrease even In the cylinder on the compression stroke. Accordingly, there is created a state in which every cylinder is filled with fresh air at atmospheric pressure soon after engine stop.

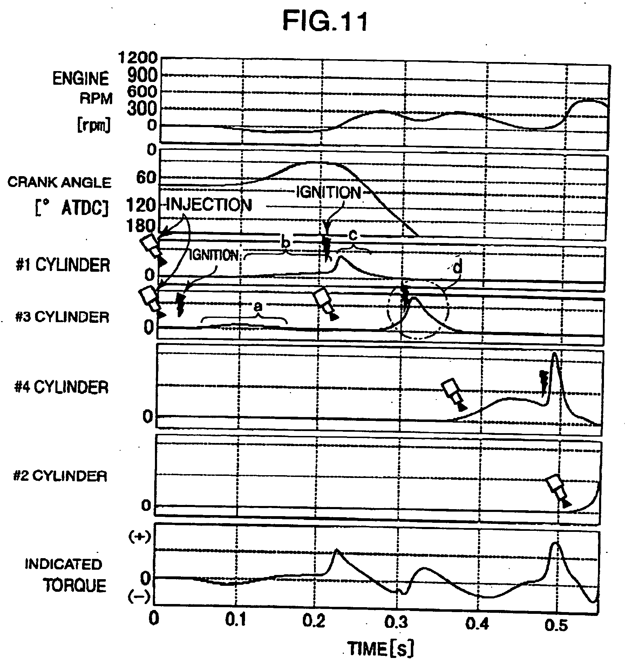

When the conditions for engine restart have been met after engine stop, the engine restart control operation is performed automatically, in which the ECU 30 carries out the routine R1 (FIG. 5) in the first restart control mode if the piston 4 in the cylinder on the expansion stroke is in the aforementioned specific range around the midpoint of the stroke and positioned within the subregion A1 closer to TDC. FIG. 10 illustrates successive cycles of the individual cylinders 3A-3D and their combustion timing (occurring in the order of (1), (2), (3) and so on as illustrated) applicable when the engine is restarted in the first restart control mode, in which arrows show the engine turning direction at each combustion cycle. FIG. 11 shows variations with time in the engine speed, crank angle, pressures in the individual cylinders 3A-3D and indicated torque occurring at engine restart in the first restart control mode.

Referring to these Figures, the initial combustion ((1) in FIG. 10) is performed in the cylinder on the compression stroke (the third cylinder 3C in the illustrated example) at an air-fuel ratio higher than the stoichiometric air-fuel ratio, and a combustion pressure (portion "a" in FIG. 11) produced by the initial combustion forces the piston 4 in the cylinder on the compression stroke down toward BDC, causing the engine to turn in the reverse direction when the engine is restarted in the first restart control mode. Since the piston 4 in the cylinder on the expansion stroke (the first cylinder 3A in the illustrated example) approaches TDC as a consequence, air in the cylinder on the expansion stroke is compressed, causing a pressure increase in the cylinder (portion "b" in FIG. 11). The cylinder on the expansion stroke is ignited to combust fuel already injected into the cylinder at a point in time when the piston 4 has sufficiently approached TDC ((2) in FIG. 10), and the engine is caused to turn in the forward running direction by a resultant combustion pressure (portion "c" in FIG. 11). Subsequently, fuel is injected into the cylinder on the compression stroke with appropriate timing so that the second combustion occurs in the cylinder at about TDC ((3) in FIG. 10). A resultant combustion pressure (portion "d" in FIG. 11) serves to provide an enhanced engine driving force.

The aforementioned second combustion in the cylinder on the compression stroke is made possible by unused air which remains in the cylinder because the initial combustion in the same cylinder on the compression stroke is made at a high air-fuel ratio (lean mixture). Since the fuel is injected into the cylinder on the compression stroke and a resultant air-fuel mixture is compressed under conditions where the internal temperature of the cylinder has been increased by the initial combustion, the second combustion is produced by compressed self-ignition.

After the aforementioned second combustion in the cylinder which was on the compression stroke has been produced and the piston 4 in the cylinder which undergoes the compression stroke next has reached TDC on the compression stroke, combustion is sequentially produced in the individual cylinders 3A-3D by the ordinary control operation, whereby the engine restart control operation is finished.

When the piston 4 in the cylinder on the expansion stroke is in the aforementioned specific range around the midpoint of the stroke and positioned within the subregion A2 closer to BDC, the ECU 30 carries out engine restart control operation (routine R2) in the second restart control mode.

In the control operation performed in the second restart control mode, the initial combustion (corresponding to (1) in FIG. 10) is made in the cylinder on the compression stroke at an air-fuel ratio approximately equal to or lower than the stoichiometric air-fuel ratio. As a result, the piston 4 in the cylinder on the compression stroke is forced downward so that the engine turns in the reverse direction, causing a pressure increase the cylinder on the expansion stroke as the piston 4 approaches TDC and air in the cylinder is compressed. Then, the cylinder on the expansion stroke is ignited to combust fuel already injected into the cylinder at a point in time when the piston 4 has sufficiently approached TDC ((2) in FIG. 10), so that the engine is now caused to turn in the forward running direction in the same fashion as in the control operation performed in the first restart control mode. In the second restart control mode, however, combustion ((3) In FIG. 10) is not produced in the cylinder on the compression stroke when its piston 4 passes TDC after the combustion in the cylinder on the expansion stroke, and the engine is kept turning by inertia until the cylinder undergoing a subsequent compression stroke reaches its compression TDC. Then, the engine transfers to the ordinary control operation, whereby the above-described engine restart control operation is finished.

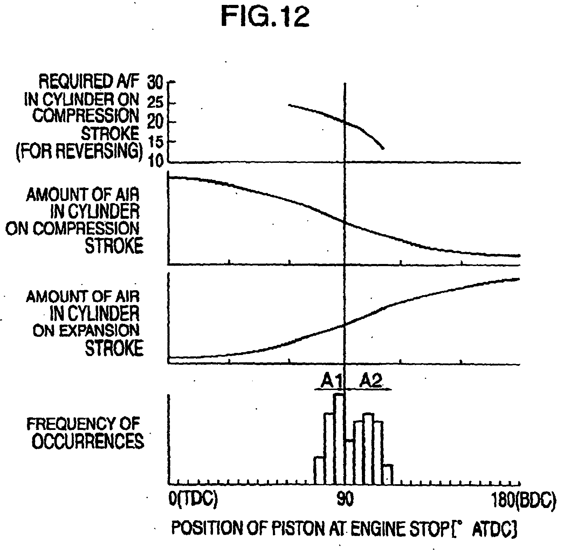

The engine is restarted in an efficient fashion by selectively using the first restart control mode and the second restart control mode depending on the engine stop position as discussed above. This point in further explained referring also to FIG. 12.

FIG. 12 shows the relationships between the piston stop position at engine stop and a required air-fuel ratio for the initial combustion (for engine reversing) performed in the cylinder on the compression stroke, the amount of air in the cylinder on the compression stroke, the amount of air in the cylinder on the expansion stroke, and the frequency of occurrences. As can be seen this Figure, the closer to TDC the piston 4 in the cylinder on the expansion stroke (the closer to BDC the piston 4 in the cylinder on the compression stroke) at engine stop, the smaller the amount of air in the cylinder on the expansion stroke and the larger the amount of air in the cylinder on the compression stroke, and on the contrary, the closer to BDC the piston 4 In the cylinder on the expansion stroke (the closer to TDC the piston 4 in the cylinder on the compression stroke) at engine stop, the larger the amount of air in the cylinder on the expansion stroke and the smaller the amount of air in the cylinder on the compression stroke.

In the initial combustion in the cylinder on the compression stroke, it is required to produce a torque necessary for reversing the engine up to a specific position where the piston 4 in the cylinder on the compression stroke is located slightly before it reaches BDC (slightly before the piston 4 in the cylinder on the expansion stroke reaches TDC. If the piston 4 in the cylinder on the compression stroke is located closer to TDC, the amount of air in the cylinder on the expansion stroke is small and the torque required for reversing the engine up to the aforementioned specific position is relatively high, so that the required air-fuel ratio is low. In contrast, If the piston 4 in the cylinder on the compression stroke is located closer to BDC, the amount of air in the cylinder on the expansion stroke is large and the torque required for reversing the engine up to the aforementioned specific position is relatively low, so that the required air-fuel ratio is high.

In the cylinder on the expansion stroke, the closer to BDC the piston 4, the larger the amount of air in the cylinder so that a larger quantity of fuel can be combusted.

Therefore, when the piston 4 in the cylinder on the expansion stroke is located within the subregion A2 closer to BDC than the midpoint of the stroke (the piston 4 in the cylinder on the compression stroke is closer to TDC) at engine stop, the air-fuel ratio In the cylinder on the compression stroke for the initial combustion is decreased to satisfy the aforementioned requirement and the second combustion at about the compression stroke top dead center is not produced because air usable for combustion is not left after the initial combustion. However, a relatively large amount of air exists in the cylinder on the expansion stroke. Thus, an amount of fuel corresponding to the amount of air present is Injected into the cylinder on the expansion stroke and the resultant air-fuel mixture is compressed, ignited and combusted, whereby the engine can be turned until the cylinder on the compression stroke exceeds the compression stroke top dead center and the cylinder undergoing a subsequent compression stroke reaches its compression TDC to accomplish engine restart.

On the other hand, when the piston 4 in the cylinder on the expansion stroke is located within the subregion A1 closer to TDC than the midpoint of the stroke (the piston 4 in the cylinder on the compression stroke is closer to BDC) at engine stop, the combustion in the expansion stroke produces a lower torque compared to the case where the piston 4 is located within the subregion A2 because the amount of air in the cylinder on the expansion stroke is small. However, since the air-fuel ratio in the cylinder on the compression stroke for the initial combustion is decreased to satisfy the aforementioned requirement, air consequently left in the cylinder after the initial combustion is used to produce the second combustion In the cylinder on the compression stroke, thereby supplementing the torque for driving the engine in the forward running direction. A sufficient amount of torque for accomplishing engine restart is obtained by a combination of the combustion in the cylinder on the expansion stroke and the second combustion in the cylinder on the compression stroke.

In this embodiment, the throttle valves 17 are opened to a specific opening angle for a specific period of time after interruption of the fuel supply while the engine is being stopped to increase the amounts of intake air, particularly the amount of air drawn into the cylinder which will be on the expansion stroke at engine stop, in order to increase forces opposing movements of the pistons 4 in the cylinders which will be on the compression and expansion strokes at engine stop toward their top dead centers as stated above. Therefore, the piston 4 in the cylinder which is initially on the expansion stroke at engine stop almost always falls within the aforementioned region A around the midpoint of the stroke, particularly within the subregion A2 more or less close to BDC in most cases, as shown also in FIG. 12. The engine can be restarted efficiently as the piston stop position is adjusted in this fashion.

If the piston 4 in the cylinder on the expansion stroke stops at a position closer to TDC (the piston 4 in the cylinder on the compression stroke stops at a position closer to BDC) than the region A, it becomes impossible to ensure a sufficient amount of movement of the engine in its reversing direction and the torque obtained by the combustion in the cylinder on the expansion stroke decreases due to the reduced amount of air in the cylinder on the expansion stroke. If the piston 4 in the cylinder on the expansion stroke stops at a position closer to BDC (the piston 4 in the cylinder on the compression stroke stops at a position closer to TDC) than the region A, on the contrary, a sufficient torque for reversing the engine is not obtained due to a reduction in the amount of air in the cylinder on the compression stroke. If the piston stop position falls within the aforementioned region A, however, the engine can be reversed by the initial combustion in the cylinder which is on the compression stroke, subsequent combustion in the cylinder which is initially on the expansion stroke is performed in an appropriate fashion, and resultant combustion energy can be sufficiently exerted on the piston 4 in the cylinder on the expansion stroke. In particular, if the piston 4 in the cylinder on the expansion stroke is located within the subregion A2 closer to BDC at engine stop, a sufficient amount of air can be held in the cylinder initially on the expansion stroke. This serves to increase combustion energy produced in the cylinder which is initially on the expansion stroke and thereby enhance engine starting performance.

Should the piston stop position fall at a position out of the aforementioned region A in rare circumstances, the third restart control mode is selected to restart the engine with the assistance of the starter 31.

The starting system of the invention is not limited in its specific construction to the foregoing embodiment but may be modified in various ways. Given below are examples of such modifications that can be made.

(1) In addition to the aforementioned elements, the foregoing embodiment may be modified in such a manner that the valve actuating mechanism for the exhaust valves 12 further includes a variable valve timing mechanism 41 which makes it possible to vary at least exhaust valve opening timing as shown in FIG. 10 whereby the opening timing of the exhaust valve 12 of the cylinder which is initially on the expansion stroke at engine stop is delayed than normal when the cylinder first undergoes the exhaust stroke after engine restart, so that the exhaust valve 12 opens approximately at BDC (refer to FIG. 10).

In this modification, the exhaust valve 12 of the cylinder initially on the expansion stroke will not open at engine stop even if the piston 4 in the cylinder which will be on the expansion strode at engine stop moves to a position close to BDC while the piston 4 in the cylinder is producing oscillatory motion immediately before stopping. This helps prevent the amount of air in the cylinder initially on the expansion stroke from decreasing before engine stop. In addition, energy of combustion produced in the cylinder initially on the expansion stroke efficiently acts on the piston 4 in the cylinder up to approximately BDC without escaping into the exhaust passage 16 during engine restart, resulting in an improvement in engine starting performance.

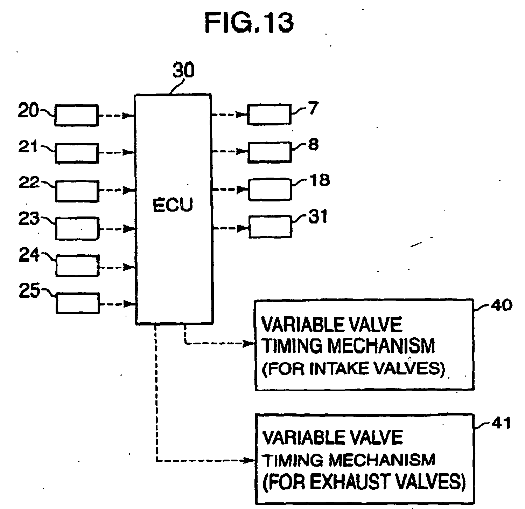

(2) While a certain amount of air is left unused in the cylinder on the compression stroke after the initial combustion by increasing the air-fuel ratio to a level higher than the stoichiometric air-fuel ratio when restarting the engine in the first restart control mode in the foregoing embodiment, an additional amount of air may be supplied into the cylinder after the initial combustion therein instead. For example, the foregoing embodiment may be modified in such a manner that the valve actuating mechanism for the intake valves 11 includes a variable valve timing mechanism 40 which makes it possible to vary at least intake valve closing timing (refer to FIG. 13) whereby the closing timing of the intake valve 11 for the cylinder on the compression stroke is delayed than normal, so that the intake valve 11 is closed at a point delayed by a specific small crank angle into the compression stroke slightly beyond BDC when the engine resumes combustion cycles (refer to FIG. 10).

In this modification, the intake valve 11 for the cylinder on the compression stroke is opened when the engine has turned back toward an advanced side from the intake valve closing point by the initial combustion in the cylinder on the compression stroke, whereby part of gas in the cylinder is replaced by fresh air to supplement air to be used for the second combustion. In addition to this effect, the modification provides an advantageous effect for engine restart in that the pressure in the cylinder on the compression stroke drops when its intake valve 11 is opened after the initial combustion and, therefore, a resisting force exerted on the piston 4 in the cylinder on the compression stroke is reduced when the engine turns in the forward running direction as a result of subsequent combustion in the cylinder which was on the compression stroke.

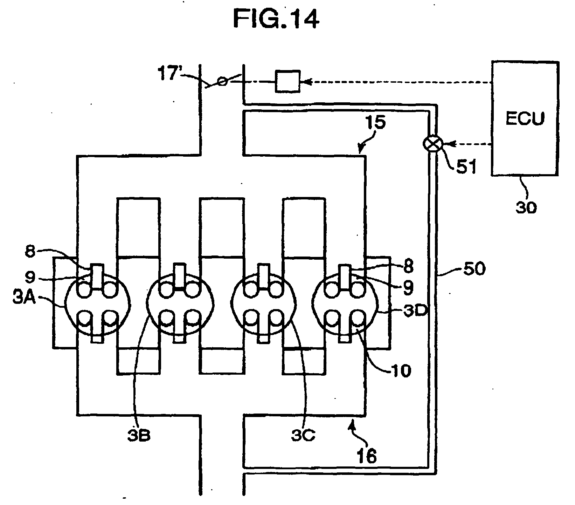

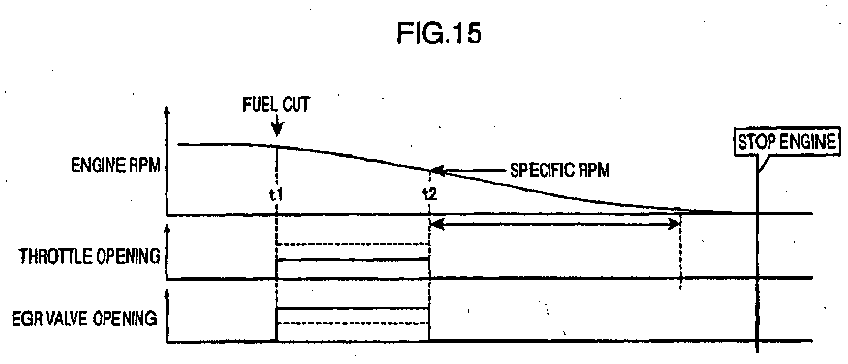

(3) There may be provided means for recirculating exhaust gas in a controlled fashion when the engine is stopping, in addition to the earlier-mentioned intake air quantity regulator for controlling the quantity of intake air. In this modified form of the embodiment, there are provided a throttle valve 17' serving as the Intake air quantity regulator in the intake passage 15 and an exhaust gas recirculation (EGR) valve 51 in an EGR channel 50 for recirculating exhaust gas from the exhaust passage 16 back into the intake passage 15 as shown in FIG. 14. The throttle valve 17' and the EGR valve 51 are controlled by the ECU 30. When the engine is going to stop, the ECU 30 opens the throttle valve 17' and the BGR valve 51 for a specific period of time after cutting the fuel supply as shown in FIG. 15, wherein valve openings are adjusted in accordance with the engine temperature detected by the water temperature sensor 24. More particularly, when the engine temperature is relatively low, the opening of the throttle valve 17' Is decreased and the opening of the EGR valve 51 is increased as shown by solid lines to increase the ratio of the amount of exhaust gas to the amount of fresh air introduced into the cylinders 3A-3D. In contrast, when the engine temperature is relatively high, the opening of the throttle valve 17' is increased and the opening of the EGR valve 51 is decreased as shown by broken lines to decrease the ratio of the amount of exhaust gas to the amount of fresh air introduced into the cylinders 3A-3D.

This construction makes it possible to properly regulate the temperature in the cylinders 3A-3D and the amounts of air drawn into the cylinders 3A-3D at engine stop.

Specifically, even if the EGR valve 51 is opened, recirculated gas is substantially air scarcely containing burned gas during engine stop operation after interruption of the fuel supply. However, this recirculated "gas" is high-temperature air because it has once passed through the combustion chambers 5, so that the higher the ratio of the recirculated gas, the higher the temperature of air introduced into the cylinders 3A-3D. Therefore, when the engine temperature is low, the temperature in the cylinders 3A-3D at engine stop is increased by increasing the ratio of the recirculated gas. This is advantageous in accelerating evaporation of fuel during engine restart operation and improving engine starting performance. When the engine temperature is high, on the other hand, it is possible to prevent an excessive increase in the temperature of air Introduced into the cylinders 3A-3D by decreasing the ratio of the recirculated gas. This makes it possible to prevent a reduction In air charging quantity due to a reduction in intake air density.

(4) When the pistons 4 are located within a specific range at engine stop, the engine is restarted by producing the initial combustion in the cylinder which is on the compression stroke to turn the engine slightly in the reverse running direction and then producing subsequent combustion in the cylinder which was initially on the expansion stroke in the foregoing embodiment. The embodiment may be so modified as to first supply fuel into the cylinder which is initially on the expansion stroke at engine stop and produce initial combustion in the cylinder initially on the expansion stroke by igniting a resultant mixture after a lapse of a specific period of time without reversing the engine by the aforementioned initial combustion in the cylinder which is on the compression stroke.

With the engine thus modified, sufficient combustion energy is not obtained due to an insufficient amount of air in the cylinder which is initially on the expansion stroke if the piston 4 in the cylinder is located too close to TDC at engine stop. If the piston 4 in the cylinder is located too close to BDC at engine stop, on the contrary, sufficient torque is not obtained because energy produced by combustion can act on the piston 4 over an extremely short distance only.

The arrangement of the invention is advantageous in this case too. Specifically, the engine starting performance can be efficiently improved if the probability that the piston 4 in the cylinder initially on the expansion stroke falls within the aforementioned region A halfway on the stroke is increased by regulating the quantity of intake air during engine stop operation. In particular, if the piston 4 is caused to stop within the aforementioned subregion A2 closer to BDC, it is possible to increase combustion energy by relatively increasing the amount of air in the cylinder initially on the expansion stroke while preventing the distance over which the combustion energy acts on the piston 4 from becoming extremely short. This is advantageous for improving the engine starting performance.

(5) In the foregoing embodiment, the throttle valves 17 constitute the intake air quantity regulator for regulating the cross-sectional area of intake channels. This construction may be modified to incorporate idle speed control (ISC) valves provided in ISC channels bypassing the throttle valves 17, wherein the ISC valves is set at a specific opening for a specific period of time during engine stop operation. Instead of these valves, there may be provided a variable valve timing mechanism for varying intake valve opening and closing timing as an intake air quantity regulator.

## Claims

1. An engine starting system which automatically stops an engine when specific conditions for engine stop have been satisfied and automatically restarts the engine by injecting fuel into a cylinder (3A) which is initially on an expansion stroke at engine stop and causing ignition and combustion in said cylinder (3A) which is initially on the expansion stroke when conditions for engine restart have been satisfied, said engine starting system comprising
an intake air quantity regulator (17) for regulating the amount of intake air drawn into cylinders of the engine
and a controller (30) for controlling said intake air quantity regulator (17) while / 30 performing engine stop operation after the conditions for engine restart have been satisfied;
wherein said controller (30) actuates said intake air quantity regulator (17) and performs control operation for increasing the amount of intake air for a specific period of time during execution of the engine stop operation to increase forces opposing movements toward top dead centers of pistons in a cylinder (3C) which is initially on a compression stroke and in said cylinder (3A) which is initially on the expansion stroke at engine stop,
**characterized in that**
said intake air quantity regulator (17) is formed of a valve provided in an intake passage (15) for adjusting its cross-sectional area,
that said controller (30) performs the control operation for increasing the amount of intake air after cutting fuel supply and setting said valve (17) at a specific opening when the conditions for engine stop have been satisfied
and that said controller (30) closes said valve (17) with specific timing after increasing the amount of intake air by setting said valve at the specific opening so that the amount of intake air drawn into said cylinder (3C) which is on the compression stroke becomes smaller than the amount of intake air drawn into said cylinder (3A) which is on the expansion stroke at engine stop.

2. The engine starting system according to claim 1, wherein said controller (30) controls said intake air quantity regulator (17) in such a manner that the amount of intake air drawn into said cylinder (3A) which is initially on the expansion stroke is larger than than the amount of intake air drawn into said cylinder (3C) which is on the compression stroke at engine stop.

3. The engine starting system according to claim 1 or 2 further comprising an EGR valve (51) provided in an EGR channel (50), wherein said controller (30) controls said valve (17') and said EGR valve (51) provided in the EGR channel (50) in accordance with engine temperature when increasing the amount of intake air by setting said valve (17') at the specific opening, and wherein said controller (30) increases the ratio of the amount of exhaust gas to the amount of intake air introduced into the cylinders by decreasing the opening of said valve (17') and increasing the opening of said EGR valve (51) when the engine temperature is relatively low, and decreases the ratio of the amount of exhaust gas to the amount of intake air introduced into the cylinders by increasing the opening of said valve (17') and decreasing the opening of said EGR valve (51) when the engine temperature is relatively high.

4. The engine starting system according to any one of claims 1 to 3 further comprising a variable valve timing mechanism (41) which makes it possible to vary at least exhaust valve opening timing, wherein said controller (30) retards the exhaust valve opening timing up to approximately the bottom dead center when performing the engine stop operation.

## Patentansprüche

1. Verbrennungsmotoranlassersystem, das einen Verbrennungsmotor, wenn spezifische Bedingungen für ein Abschalten des Verbrennungsmotors erfüllt sind, automatisch abschaltet und den Verbrennungsmotor automatisch wiederanläßt, indem in einen Zylinder (3A), der sich bei einem Abschalten des Verbrennungsmotors anfänglich in einem Verbrennungshub befindet, Kraftstoff eingespritzt und eine Zündung und Verbrennung in dem anfänglich im Verbrennungshub befindlichen Zylinder (3A) bewirkt werden, wenn die Bedingungen für ein Wiederanlassen des Verbrennungsmotors erfüllt sind, wobei das Verbrennungsmotoranlassersystem folgendes umfaßt:
einen Einlaßluftmengenregulierer (17), um die Menge der in Zylinder des Verbrennungsmotors eingezogenen Einlaßluft zu regulieren; und
eine Steuervorrichtung (30), um den Einlaßluftmengenregulierer (17) während des Durchführens eines Abschaltens des Verbrennungsmotors zu steuern, nachdem die Bedingungen für ein Wiederanlassen des Verbrennungsmotors erfüllt sind,
wobei die Steuervorrichtung (30) den Einlaßluftmengenregulierer (17) betätigt und einen Steuerungsvorgang durchführt, um die Einlaßluftmenge für eine spezifische Zeitdauer während des Durchführens des Verbrennungsmotorabschaltvorgangs zu erhöhen, um Kräfte zu erhöhen, die Bewegungen hin zu den oberen Totpunkten von Kolben in einem Zylinder (3C), der sich anfänglich in einem Verdichtungshub befindet, sowie in dem Zylinder (3A), der sich beim Abschalten des Verbrennungsmotors anfänglich im Verbrennungshub befindet, entgegenzuwirken,
**dadurch gekennzeichnet, daß**
der Einlaßluftmengenregulierer (17) aus einem Ventil in einem Einlaßdurchgang (15) gebildet ist, um seine Querschnittsfläche einzustellen,
die Steuervorrichtung (30) den Steuerungsvorgang zum Erhöhen der Einlaßluftmenge nach erfolgtem Abschalten der Kraftstoffzufuhr und nach erfolgtem Einstellen des Ventils (17) auf eine spezifische Öffnung durchführt, wenn die Bedingungen für ein Abschalten des Verbrennungsmotors erfüllt sind, und
die Steuervorrichtung (30) das Ventil (17) nach erfolgtem Erhöhen der Einlaßluftmenge durch Einstellen des Ventils auf die spezifische Öffnung mit einer spezifischen Steuerzeit schließt, so daß die Einlaßluftmenge, die in den im Verdichtungshub befindlichen Zylinder (3C) eingezogen wird, kleiner als die Einlaßluftmenge wird, die in den beim Abschalten des Verbrennungsmotors im Verbrennungshub befindlichen Zylinder (3A) eingezogen wird.

2. Verbrennungsmotoranlassersystem nach Anspruch 1, bei dem die Steuervorrichtung (30) den Einlaßluftmengenregulierer (17) in einer solchen Weise steuert, daß die Einlaßluftmenge, die in den anfänglich im Verbrennungshub befindlichen Zylinder (3A) eingezogen wird, größer als die Einlaßluftmenge ist, die in den beim Abschalten des Verbrennungsmotors im Verdichtungshub befindlichen Zylinder (3C) eingezogen wird.

3. Verbrennungsmotoranlassersystem nach Anspruch 1 oder 2, das weiterhin ein in einem EGR-Kanal (50) vorgesehenes EGR-Ventil (51) umfaßt, wobei die Steuervorrichtung (30) das Ventil (17') und das im EGR-Kanal (50) vorgesehene EGR-Ventil (51) in Übereinstimmung mit der Verbrennungsmotortemperatur steuert, wenn die Einlaßluftmenge durch Einstellen des Ventils (17') auf die spezifische Öffnung erhöht wird, wobei die Steuervorrichtung (30) das Verhältnis zwischen der Abgasmenge und der in die Zylinder eingeleiteten Einlaßluftmenge erhöht, indem die Öffnung des Ventils (17') verkleinert und die Öffnung des EGR-Ventils (51) vergrößert wird, wenn die Verbrennungsmotortemperatur relativ niedrig ist, und das Verhältnis zwischen der Abgasmenge und der in die Zylinder eingeleiteten Einlaßluftmenge verringert, indem die Öffnung des Ventils (17') vergrößert und die Öffnung des EGR-Ventils (51) verkleinert wird, wenn die Verbrennungsmotortemperatur relativ hoch ist.

4. Verbrennungsmotoranlassersystem nach einem der Ansprüche 1 bis 3, das weiterhin einen variablen Ventilsteuerungsmechanismus (41) umfaßt, mit dem es möglich ist, mindestens die Abgasventilöffnungszeit zu variieren, wobei die Steuervorrichtung (30) beim Durchführen des Verbrennungsmotorabschaltvorgangs die Abgasventilöffnungszeit etwa bis zum unteren Totpunkt verzögert.

## Revendications

1. Système de démarrage pour moteur qui arrête automatiquement un moteur lorsque des conditions spécifiques pour un arrêt de moteur ont été satisfaites et redémarre automatiquement le moteur en injectant le combustible dans un cyclindre (3A) qui est initialement sur une course d'expansion à l'arrêt du moteur et en provoquant l'allumage et la combustion dans ledit cylindre (3A) qui est initialement sur la course d'expansion lorsque les conditions pour le redémarrage du moteur ont été satisfaites, ledit système de démarrage pour moteur comprenant :
un régulateur (17) de la quantité d'air d'admission pour réguler la quantité d'air d'admission aspirée dans les cylindres du moteur
et un dispositif de commande (30) pour commander ledit régulateur (17) de la quantité d'air d'admission tout en exécutant une opération d'arrêt du moteur après que les conditions pour le redémarrage du moteur ont été satisfaites,
où ledit dispositif de commande (30) actionne ledit régulateur (17) de la quantité d'air d'admission et exécute une opération de commande afin d'augmenter la quantité d'air d'admission pendant une période de temps spécifique pendant l'exécution de l'opération d'arrêt du moteur pour augmenter des forces s'opposant à des mouvements vers les points morts hauts de pistons dans un cylindre (3C) qui est initialement sur une course de compression et dans ledit cylindre (3A) qui est initialement sur la course d'expansion lors de l'arrêt du moteur,
**caractérisé en ce que**
ledit régulateur (17) de la quantité d'air d'admission est formé par une soupape prévue dans un passage d'admission (15) pour ajuster sa zone en section transversale, **en ce que** ledit dispositif de commande (30) exécute l'opération de commande pour augmenter la quantité d'air d'admission après une coupure de l'alimentation du combustible et régler ladite soupape (17) à une ouverture spécifique lorsque les conditions pour l'arrêt du moteur ont été satisfaites
et **en ce que** ledit dispositif de commande (30) ferme ladite soupape (17) à un instant spécifique après l'augmentation de la quantité de l'air d'admission en réglant ladite soupape à l'ouverture spécifique de telle sorte que la quantité d'air d'admission aspirée dans ledit cylindre (3C), qui est sur la course de compression, devient plus petite que la quantité de l'air d'admission aspirée dans ledit cylindre (3A) qui est sur la course d'expansion lors de l'arrêt du moteur.

2. Système de démarrage pour moteur selon la revendication 1, où ledit dispositif de commande (30) commande ledit régulateur (17) de la quantité d'air d'admission de telle manière que la quantité d'air d'admission aspirée dans ledit cylindre (3A), qui est initialement sur la course d'expansion, est plus grande que la quantité de l'air d'admission aspirée dans ledit cylindre (3C) qui est sur la course de compression lors de l'arrêt du moteur.

3. Système de démarrage pour moteur selon la revendication 1 ou 2, comprenant en outre une soupape EGR (51) prévue dans un canal EGR (50), où ledit dispositif de commande (30) commande ladite soupape (17') et ladite soupape EGR (51) prévue dans le canal EGR (50) en accord avec la température du moteur lors de l'augmentation de la quantité d'air d'admission en réglant ladite soupape (17') à l'ouverture spécifique, et où ledit dispositif de commande (30) augmente le rapport de la quantité de gaz d'échappement à la quantité de l'air d'admission introduit dans les cylindres en diminuant l'ouverture de ladite soupape (17') et en augmentant l'ouverture de ladite soupape EGR (51) lorsque la température du moteur est relativement basse, et diminue le rapport de la quantité des gaz d'échappement à la quantité d'air d'admission introduit dans les cylindres en augmentant l'ouverture de ladite soupape (17') et en diminuant l'ouverture de ladite soupape EGR (51) lorsque la température du moteur est relativement élevée.

4. Système de démarrage pour moteur selon l'une des revendications 1 à 3, comprenant en outre un mécanisme de réglage de soupape variable (41) qui permet de faire varier au moins l'instant d'ouverture de la soupape d'échappement, où ledit dispositif de commande (30) retarde l'instant d'ouverture de la soupape d'échappement approximativement au point mort bas lors de l'exécution de l'opération d'arrêt du moteur.
